# EUROPÄISCHE PATENTSCHRIFT

(11) **EP 1 694 520 B1**
(45) Veröffentlichungstag und Bekanntmachung des Hinweises auf die Patenterteilung: **04.07.2007**
(21) Anmeldenummer: 04802913.6
(22) Anmeldetag: 09.12.2004
(51) Int. Cl.: B60G 21/055

(54) **Verfahren zur Herstellung eines Stabilisierungsdrehstabes, vorzugsweise eines in einer Kraftfahrzeugkarosserie mit mindestens einem Elastomerpuffer gelagerten Drehstabes**
Method for producing a stabilisation torsion bar preferably mounted in a motor vehicle comprising at least one elastomer bumper torsion bar
Procédé de production d'une barre stabilisatrice, de préférence, d'une barre de torsion montée dans une carosserie d'un véhicule automobile présentant au moins un amortisseur en élastomère

(30) Priorität: 19.12.2003 DE 10360590
(43) Veröffentlichungstag der Anmeldung: 30.08.2006
(73) Patentinhaber: Henniges Automotive GmbH & Co. KG, 31547 Rehburg Loccum (DE)
(72) Erfinder: WESTENBERGER, Roman, 31547 Rehburg-Loccum (DE); VOGEL, Reiner, 31609 Balge (DE)
(74) Vertreter: Siekmann, Gunnar
(86) Internationale Anmeldenummer: PCT/DE2004/002707
(87) Internationale Veröffentlichungsnummer: WO 2005/058622

(56) Entgegenhaltungen:
- FR-A- 2 768 661

## Beschreibung

Die Erfindung betrifft ein Verfahren zur Herstellung eines Stabilisierungsdrehstabes mit mindestens einem Elastomerpuffer wobei jeder Elastomerpuffer eine zum Drehstab konzentrische Metallhülse hat die einen Träger für einen den Drehstab umhüllenden Elastomerkörper bildet. FR 2 768 661 offenbart ein solches Verfahren gemäß dem Oberbegriff des Anspruchs 1.

Stabilisierungsdrehstäbe der vorbezeichneten Gattung sind im Kraftfahrzeugbau eingesetzte Torsionsfedern, die der Stabilisierung der Karosserie eines Kraftfahrzeuges bei Kurvenfahrten gegen Neigung und Verwindung dienen. Stabilisierungsdrehstäbe werden mit dem Fahrwerk eines Kraftfahrzeugs einerseits und mit der Karosserie andererseits verbunden, beispielsweise verschraubt. Sie werden dabei mit Elastomerpuffern gelagert, damit keine Übertragung von Radgeräuschen, Fahrbahngeräuschen oder dergleichen auf die Karosserie und damit in die Fahrgastzelle hinein erfolgt.

Die Ausrüstung der Drehstäbe mit Elastomerpuffern ist eine mehr oder weniger aufwendige Montagearbeit, die dem Einbau des fertigen Stabilisierungsdrehstabes in eine Kraftfahrzeugkarosserie vorangeht.

Der Erfindung liegt die Aufgabe zugrunde, bei der Bereitstellung eines montagefertigen Stabilisierungsdrehstabes die Vormontage der Elastomerpuffer zu vermeiden, und einen einbaufertig vorbereiteten Stabilisierungsdrehstab bereitstellen zu können.

Diese Aufgabe ist verfahrensmäßig durch die Merkmale des Patentanspruchs 1 gelöst.

Weiterbildungen und vorteilhafte Ausgestaltungen ergeben sich aus den Unteransprüchen 2 bis 5.

Erfindungsgemäß werden als Schellen ausgebildete Metallhülsen verwendet, so daß die der Befestigung des Stabilisierungsdrehstabes an der Kraftfahrzeugkarosserie dienende Schelle zugleich mit Vorteil auch den Elastomerpuffer bildet. Der erfindungsgemäß hergestellte Stabilisierungsdrehstab weist somit anvulkanisierte Schellen auf. Daraus ergibt sich der Vorteil, daß die vorbestimmte Geometrie der Stabilisierungsdrehstäbe nach ihrer Fertigstellung gleichbleibend ist, so daß eine automatisierte Montage eingerichtet werden kann.

Die stets gleichbleibende Geometrie und Ausgestaltung wird ermöglicht durch die eingesetzten Formwerkzeuge bzw. ermöglicht die Einhaltung gleichbleibender Dimensionierungen und Formgebungen der Stabilisierungsdrehstäbe mit ihren zugleich die Funktion von Befestigungsschellen erfüllenden Elastomerpuffern erst den Einsatz von mit Vorteil taktweise arbeitenden Formwerkzeugen.

In die Formwerkzeuge werden die Einzelteile des Stabilisierungsdrehstabes, also die Drehstäbe und die darauf gezogene, als Schelle ausgebildeten Metallhülse eingelegt und durch Einspritzen eines Elastomers entsteht dann der ausvulkanisierbare Elastomerkörper, so daß nach Öffnen des Formwerkzeuges ein fertiger Stabilisierungsdrehstab mit Elastomerpuffern entnommen werden kann. Dieser fertige Stabilisierungsdrehstab ist montagefertig und kann sofort einer automatisierten Montage beim Kraftfahrzeughersteller zugeführt werden.

Primer und Haftvermittler, mit denen die einander zugekehrten Flächen der Drehstäbe und der Metallhülse bzw. Schelle beschichtet werden, sind an die Oberflächen bzw. die Werkstoffe der Flächen anpaßbar. Es kann also stets ein optimal wirkender Primer mit entsprechendem Haftvermittler ausgewählt und verwendet werden.

Als Primer ist z. B. ein Produkt Chemosil 211 bestens geeignet. Für einen Haftvermittler hat sich ein Produkt Chemosil 411 als vorteilhaft gezeigt.

In Formwerkzeuge eingelegte Drehstäbe müssen durch die Kavitäten verlaufen, woraus folgt, daß die Formhälften eines Formwerkzeuges in den Randbereichen der Kavitäten, also dort, wo begrenzende Wände Abschnitte bilden, die bei geschlossenem Formwerkzeug aufeinanderliegen sollen, auch mehr oder weniger die Oberfläche des eingelegten Drehstabes berühren. Das dichte Aufeinanderliegen der Formhälften ist jedoch aufgrund von Maßabweichungen im Durchmesser der Drehstäbe nicht immer und überall möglich. Ist der Durchmesser eines eingelegten Drehstabes zu groß, läßt sich das Formwerkzeug nicht schließen und aus der Kavität könnte in den durch das Nichtschließen gebildeten Spalt Elastomer gespritzt werden. Das Formwerkzeug würde beschädigt und ein Stabilisierungsdrehstab wäre nur noch Ausschußware.

Ist dagegen ein Drehstab mit Untermaß eingelegt, entsteht aber ebenfalls bei geschlossenem Formwerkzeug ein Spalt, der wieder den nachteiligen Austritt von eingespritztem Elastomer aus der Kavität in den Spalt ermöglicht.

Gemäß der Erfindung wird dieses Problem bei der Verwendung von Formwerkzeugen zur Herstellung von Stabilisierungsdrehstäben mit anvulkanisiertem Elastomerpuffer dadurch vermieden, daß in die Formhälften der Formwerkzeuge in unmittelbarer Nachbarschaft der Kavitäten Dichtelemente eingebracht werden, welche einen Spalt zwischen eingelegtem Drehstab und den Formhälften des Formwerkzeugs abdichten können. Bei geschlossenem Formwerkzeug liegen die Dichtungen in den ihnen zugedachten Dichtpositionen an der Außenfläche des im Formwerkzeug befindlichen Drehstabes an. Jedes Dichtelement ist schalenartig ausgebildet und besteht aus zwei Schalenhälften, von denen jede in der zugeordneten Formhälfte des Formwerkzeugs, z. B. in einer zugeordneten Vertiefung, angebracht werden kann. Jede Halbschale ist ein Metallteil, das sich mit der Formhälfte des Formwerkzeugs verschrauben läßt, damit gegebenenfalls ein Auswechseln von Dichtelementen möglich ist, sobald deren Verschleiß auftritt.

Die Metallhalbschalen der Dichtelemente sind innen mit elastischen Dichtungen ausgekleidet. Jede Halbschale ist damit ein sogenanntes Gummimetallelement, dessen Gummi eine am Drehstab anlegbare Oberfläche bildet, die auch in Form von Rillen, Dichtlippen oder dergleichen profiliert sein kann. Diese Profilierungen erhöhen die Dichtwirkung.

Jede Formhälfte weist entsprechende rillenartige Vertiefungen auf, die zur Aufnahme der aus Halbschalen zusammengesetzten Dichtelemente dienen.

Mit dem erfindungsgemäßen Verfahren lassen sich Stabilisierungsdrehstäbe mit stets gleichbleibender Präzision, also hoher Fertigungsqualität, fortlaufend taktweise fertigen.

Die Produktion läßt sich auch noch dadurch steigern, daß in ein Formwerkzeug gleichzeitig mehrere Drehstäbe mit aufgefädelten Metallhülsen in Form von Schellen eingelegt werden, so daß sich z. B. zwei oder mehr Stabilisierungsdrehstäbe mit anvulkanisierten Elastomerpuffern in einem Schließtakt des Formwerkzeugs fertigen lassen.

Ein Ausführungsbeispiel der Erfindung, aus dem sich weitere erfinderische Merkmale ergeben, ist in der Zeichnung dargestellt. Es zeigen:
- Fig. 1: eine schematische Draufsicht auf eine erste Formhälfte eines Formwerkzeugs,
- Fig. 2: eine schematische Seitenansicht des geschlossenen Formwerkzeugs im Schnitt, und
- Fig. 3: eine Ansicht des Formwerkzeugs gemäß Fig. 2, jedoch bei eingelegtem Drehstab mit durch Ausspritzen der Kavität gebildetem Elastomerpuffer.

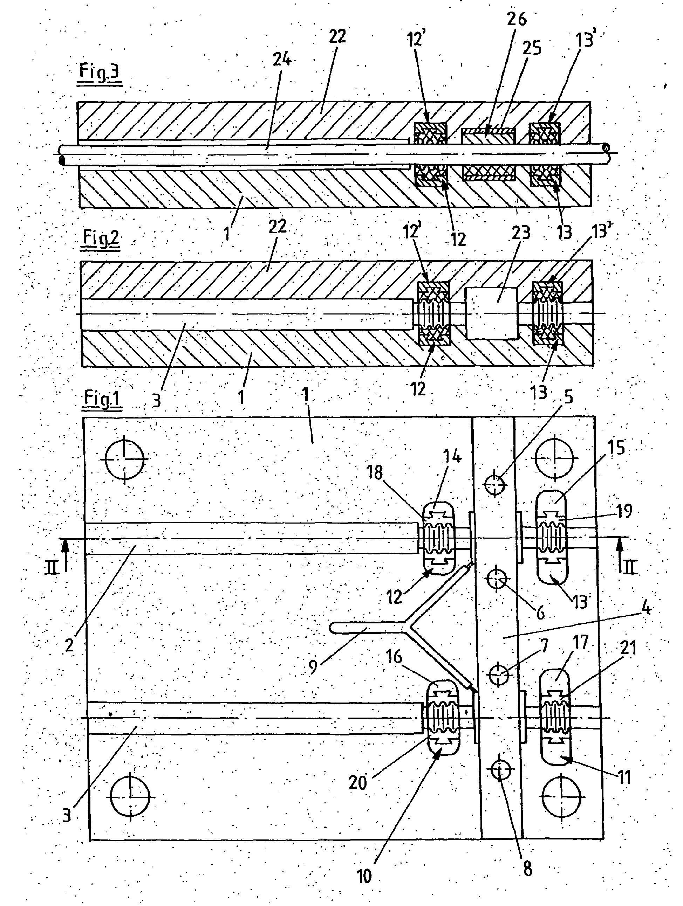

In Fig. 1 ist eine Draufsicht einer ersten unteren Formhälfte 1 eines Formwerkzeugs dargestellt, das bei der Fertigung von mit Elastomerpuffern ausgerüsteten Stabilisierungsdrehstäben verwendet wird. Die erste Formhälfte 1 ist mit Aufnahmen 2 und 3 für je einen Drehstab versehen. Die Aufnahmen 2, 3 sind rillenartige Einarbeitungen bzw. Vertiefungen in der plattenartigen ersten Formhälfte 1. Quer zu den Aufnahmen 2 und 3 verläuft eine Vertiefung 4, in die als Schelle ausgebildete Metallhülsen einlegbar sind. Die Schellen sind mit ihren Befestigungslöchern auf Stifte 5, 6, 7, 8 steckbar. Die Stifte 5, 6, 7, 8 dienen also der Positionierung einzulegender Schellen bzw. Metallhülsen in Relation zum Drehstab.

Ein Einspritzkanal für Elastomer ist mit 9 bezeichnet. Er verzweigt sich zu jeder Aufnahme 2, 3 hin.

In entsprechende Vertiefungen der ersten Formhälfte sind erste Halbschalen 10, 11, 12, und 13 schalenartiger Dichtelemente eingesetzt. Jede Halbschale 10, 11, 12, 13 besteht aus einem äußeren Metallring 14, 15 bzw. 16, 17, in dem über eine Schwalbenschwanznut eine elastische Dichtmanschette 18, 19 bzw. 20, 21 gehalten ist. Die Dichtmanschette 18, 19, 20, 21 ist rillenartig profiliert.

Fig. 2 zeigt eine Seitenansicht eines geschlossenen Formwerkzeuges im Schnitt. Das Formwerkzeug ist geschlossen, indem auf die erste Formhälfte 1 die zweite Formhälfte 22 aufgelegt ist.

Fig. 2 läßt erkennen, wie die in den Formhälften 1 und 22 angeordneten Dichtelemente durch ihre Halbschalen (10, 11, 10', 11') gebildet sind und eine Kavität 23 vorhanden ist.

Fig. 3 zeigt eine Fig. 2 entsprechende Seitenansicht des geschlossenen Formwerkzeugs im Schnitt, wobei ein Drehstab 24 eingelegt ist. In die Kavität ist eine als Schelle ausgebildete Metallhülse 25 eingelegt. Eine Ausspritzung mit Elastomer zur Ausbildung eines an den Drehstab 24 anvulkanisierten Elastomerpuffers ist erfolgt.

Sobald die zweite Formhälfte 22 von der unteren ersten Formhälfte 1 abgehoben ist, kann der fertige, mit dem Elastomerpuffer 26 ausgerüstete Stabilisierungsdrehstab entnommen werden. Die Halbschalen der Dichtelemente bleiben in den ihnen zugeordneten Formhälften 1 und 22, da sie mit entsprechenden Befestigungsmitteln, beispielsweise Schrauben, festgesetzt sind.

## Patentansprüche

1. Verfahren zur Herstellung eines vorzugsweise in einer Kraftfahrzeugkarosserie gelagerten Stabitisierungsdrehstabes mit mindestens einem Elastomerpuffer wobei jeder Elastomerpuffer eine zum Drehstab konzentrische Metallhütse hat die einen Träger für einen den Drehstab umhülienden Elastomerkörper bildet,
**dadurch gekennzeichnet,**
**daß** auf die Außenfläche jedes Drehstabes (24), dort wo es einen Elastomerpuffer (26) anzuordnen gilt, ein Primer und ein Haftvermittler aufgebracht wird,
**daß** eine als Schelle ausgebildete Metallhülse (25) verwendet wird,
**daß** die Innenfläche jeder Metallhülse (25) mit einem Primer und einem Haftvermittler beschichtet wird,
**daß** auf jeden Drehstab (24) eine vorbestimmte Anzahl Metallhülsen (25) gefädelt bzw. gesteckt wird,
**daß** in eine erste Formhälfte (1) eines Formwerkzeugs eine erste Halbschale (10,11; 12, 13) eines schalenartigen Dichtelementes eingesetzt wird,
**daß** eine zweite Formhälfte (22) des Formwerkzeugs mit der zugeordneten zweiten Halbschale (12', 13') des Dichtelementes ausgerüstet wird,
**daß** jeder Drehstab (24) zusammen mit aufgefädelten Metallhülsen (25) in die erste Formhälfte (1) eingelegt wird, derart, daß Drehstab (24) und Metallhülse (25) bei geschlossenem Formwerkzeug in der einander vorbestimmten gegenseitigen Anordnung liegen werden und die Halbschalen (10, 11; 12, 13; 12', 13') der Dichtelemente in den ihnen zugedachten Dichtpositionen an die Außenfläche des in dem Formwerkzeug befindlichen Drehstabes (24) angelegt sind,
**daß** das Formwerkzeug durch Aufsetzen der zweiten Formhälfte (22) geschlossen wird.
**daß** die zwischen der Innenfläche der Metallhülse (25) und der Außenfläche des Drehstabes (24) befindlichen Kavitäten (23), der Formwerkzeuge mit einem in das Formwerkzeug gedrückten Elastomer ausgespritzt werden,
**daß** das Formwerkzeug geschlossen gehalten wird, bis das eingespritzte Elastomer zum den Drehstab (24) umhüllenden Elastomerkörper ausvulkanisiert ist, und
**daß** das Formwerkzeug durch Abheben der zweiten Formhälfte (22) geöffnet und jeder Drehstab (24) mit seinen anvulkanisierten Elastomerpuffern (26) entnommen wird.

2. Verfahren nach Anspruch 1, **dadurch gekennzeichnet, daß** die Halbschalen (10, 11; 12, 13; 12', 13') der Dichtelemente mit der jeweils zugeordneten Formhälfte (1, 22) des Formwerkzeugs verschraubt werden.

3. Verfahren nach einem der Ansprüche 1 und 2, **dadurch gekennzeichnet, daß** als Elastomer ein NR verwendet wird.

4. Verfahren nach einem der Ansprüche 1 und 2, **dadurch gekennzeichnet, daß** als Elastomer ein EPDM und/oder ein SBR verwendet wird.

5. Verfahren nach einem der vorhergehenden Ansprüche, **dadurch gekennzeichnet, daß** Drehstäbe (24) und Metallhülsen (25) nach der Beschichtung mit Primer und Haftvermittler zwischengelagert und auf Abruf dem Arbeitsbereich des Formwerkzeugs zwecks Einlegung zugeführt werden.

## Claims

1. A method for the manufacture of a stabilisation torsion bar, preferably supported in a motor vehicle body, with at least one elastomer cushion, wherein
each elastomer cushion has a metal sleeve concentric with the torsion bar, which sleeve forms a mounting for an elastomer body surrounding the torsion bar,
**characterised in that** a primer and an adhesive agent are applied to the outer surface of each torsion bar (24) at the location(s) where it is necessary to arrange an elastomer cushion (26),
**in that** a metal sleeve (25) designed as a clamp is used,
**in that** the inner surface of each metal sleeve (25) is coated with a primer and an adhesive agent,
**in that** onto each torsion bar (24) a predetermined number of metal sleeves (25) are threaded or placed,
**in that** a first half shell (10, 11, 12, 13) of a shell-type sealing element is inserted into a first half mould (1) of a moulding tool.
**in that** a second half mould (22) of the moulding tool is fitted with the assigned second half shell (12', 13') of the sealing element.
**in that** each torsion bar (24) is inserted into the first half mould (1) together with threaded-on metal sleeves (25),
**in that**, with the moulding tool closed, torsion bar (24) and metal sleeve (25) will lie in the reciprocal arrangement predetermined for each, and the half shells (10, 11, 12, 13, 12', 13') of the sealing elements are attached onto the outer surface of the torsion bar (24), located in the moulding tool, in the sealing positions intended for them,
**in that** the moulding tool is closed by setting on the second half mould (22),
**in that** the cavities (23) of the moulding tools located between the inner surface of the metal sleeve (25) and the outer surface of the torsion bar (24) are injected with an elastomer pressed into the moulding tool,
**in that** the moulding tool is held closed until the injected-in elastomer is cured to become the elastomer body surrounding the torsion bar (24), and
**in that** the moulding tool is opened by lifting up the second half mould (22) and each torsion bar (24) with its cured-on elastomer cushions (26) is extracted.

2. The method according to Claim 1,
**characterised in that** the half shells (10, 11, 12, 13; 12', 13') of the sealing elements are screwed together with the half mould (1, 22) of the moulding tool assigned in each case.

3. The method according to one of the Claims 1 and 2,
**characterised in that** an NR is used as the elastomer.

4. The method according to one of the Claims 1 and 2,
**characterised in that** an EPDM and/or an SBR is used as the elastomer.

5. The method according to one of the previous claims,
**characterised in that** torsion bars (24) and metal sleeves (25) are intermediately stored after the coating with primer and adhesive agent, and are supplied on demand to the working area of the moulding tool for the purpose of insertion.

## Revendications

1. Procédé de production d'une barre stabilisatrice de préférence montée dans une carrosserie d'un véhicule automobile, présentant au moins un amortisseur en élastomère, moyennant quoi chaque amortisseur en élastomère possède une douille métallique concentrique par rapport à la barre de torsion, qui forme un support pour un corps en élastomère enveloppant la barre de torsion,
**caractérisé en ce que**
sur la surface extérieure de chaque barre de torsion (24), là où il convient de disposer un amortisseur en élastomère (26), une couche primaire et un promoteur d'adhérence sont appliqués,
**en ce que** une douille métallique (25) configurée comme un collier de serrage est utilisée,
**en ce que** la surface intérieure de chaque douille métallique (25) est revêtue d'une couche primaire et d'un promoteur d'adhérence,
**en ce que** sur chaque barre de torsion (24), un nombre prédéterminé de douilles métalliques (25) est enfilé, respectivement enfoncé,
**en ce que** dans une première moitié de moule (1) d'un moule, une première demi-coque (10,11 ;12,13) d'un élément d'étanchéité en forme de coque est placée,
**en ce que** une deuxième moitié de moule (22) du moule est équipée de la deuxième demi-coque (12',13') coordonnée de l'élément d'étanchéité,
**en ce que** chaque barre de torsion (24) avec les douilles métalliques (25) enfilées sur celle-ci est placée dans la première moitié de moule (1), de telle sorte que la barre de torsion (24) et la douille métallique (25) reposent lorsque le moule est fermé dans la disposition mutuelle prédéterminée et les demi-coques (10,11 ;12,13 ;12',13') des éléments d'étanchéité sont placées dans les positions d'étanchéité pensées pour elles sur la surface extérieure de la barre de torsion (24) se trouvant dans le moule,
**en ce que** le moule est fermé en posant la deuxième moitié de moule (22),
**en ce que** les cavités (23) se trouvant entre la surface intérieure de la douille métallique (25) et la surface extérieure de la barre de torsion (24) des moules sont démoulées d'un élastomère pressé dans le moule,
**en ce que** le moule est maintenu fermé, jusqu'à ce que l'élastomère injecté dans celui-ci soit complètement vulcanisé en corps élastomère enveloppant la barre de torsion (24), et
**en ce que** le moule est ouvert en soulevant la deuxième moitié de moule (22) et chaque barre de torsion (24) est retirée avec ses amortisseurs en élastomère (26) vulcanisés.

2. Procédé selon la revendication 1, **caractérisé en ce que** les demi-coques (10,11 ;12,13 ;12',13') des éléments d'étanchéité sont vissées aux moitiés de moule (1,22) respectivement coordonnées du moule.

3. Procédé selon une des revendications 1 et 2, **caractérisé en ce que** comme élastomère, un NR est utilisé.

4. Procédé selon une des revendications 1 et 2, **caractérisé en ce que** comme élastomère, un EPDM et/ou un SBR est utilisé.

5. Procédé selon une des revendications précédentes, **caractérisé en ce que** les barres de torsion (24) et les douilles métalliques (25) sont entreposées après le revêtement avec une couche primaire et un promoteur d'adhérence et sont conduites à la demande dans la région de travail du moule dans un but d'insertion.
